# EUROPÄISCHE PATENTSCHRIFT

(11) **EP 3 180 549 B1**
(45) Veröffentlichungstag und Bekanntmachung des Hinweises auf die Patenterteilung: **08.09.2021**
(21) Anmeldenummer: 15745188.1
(22) Anmeldetag: 30.07.2015
(51) Int. Cl.: F16H 57/08, B25D 16/00, B25F 5/00

(54) **HANDWERKZEUGMASCHINENGETRIEBEEINHEIT**
HAND-HELD MACHINE TOOL GEAR UNIT
UNITÉ DE TRANSMISSION D'UNE MACHINE-OUTIL PORTATIVE

(30) Priorität: 12.08.2014 DE 102014215967
(43) Veröffentlichungstag der Anmeldung: 21.06.2017
(73) Patentinhaber: Robert Bosch GmbH, 70442 Stuttgart (DE)
(72) Erfinder: HERR, Tobias, 70569 Stuttgart (DE)
(86) Internationale Anmeldenummer: PCT/EP2015/067500
(87) Internationale Veröffentlichungsnummer: WO 2016/023761

(56) Entgegenhaltungen:
- EP-A1- 0 836 902
- EP-A1- 2 612 731
- DE-A1- 2 900 189
- JP-A- S5 712 148
- JP-A- H05 332 407
- None

## Beschreibung

### Stand der Technik

Aus der DE 10 2011 002 406 A1 ist bereits eine Handwerkzeugmaschinengetriebeeinheit, mit zumindest einer Planetengetriebestufe, die zumindest einen Planetenträger, zumindest ein drehbar zu dem Planetenträger gelagertes Planetenrad, und zumindest eine Lagereinheit aufweist, die dazu vorgesehen ist, das Planetenrad drehbar zu dem Planetenradträger zu lagern, bekannt.

Zusätzlich ist aus DE 29 00 189 A1 ein Planetengetriebe mit zumindest einem Planetenträger und mit zumindest einem Planetenrad bekannt, wobei das Planetengetriebe zumindest eine Lagereinheit umfasst, die das zumindest eine Planetenrad drehbar zu dem zumindest einen Planetenträger drehbar lagert.

### Offenbarung der Erfindung

Die Erfindung geht aus von einer Handwerkzeugmaschinengetriebeeinheit, mit zumindest einer Planetengetriebestufe, die zumindest einen Planetenträger, zumindest ein drehbar zu dem Planetenträger gelagertes Planetenrad, und zumindest eine Lagereinheit aufweist, die dazu vorgesehen ist, das Planetenrad drehbar zu dem Planetenradträger zu lagern. So eine Handwerkzeugmaschinengetriebeeinheit ist aus der EP2612731 A bekannt.

Durch die erfindungsgemäße Ausgestaltung der Handwerkzeugmaschinengetriebeeinheit kann eine besonders kompakte und leichte Handwerkzeugmaschinengetriebeeinheit für eine Handwerkzeugmaschinenvorrichtung mit einem hohen Benutzerkomfort bereitgestellt werden. Ein Durchmesser der Lagereinheit kann in besonders vorteilhafter Weise unabhängig von einem Durchmesser des Planetenrads festgelegt werden, wodurch eine robuste Handwerkzeugmaschinengetriebeeinheit mit einem hohen Wirkungsgrad bereitgestellt werden kann. Unter einer "Planetengetriebestufe" soll insbesondere eine Getriebeeinheit verstanden werden, die zusätzlich zu dem Planetenträger und dem zumindest einen Planetenrad, ein in radialer Richtung nach außen mit dem Planetenrad gekoppeltes Hohlrad und ein in radialer Richtung nach innen mit dem Planetenrad gekoppeltes Sonnenrad aufweist. Vorzugsweise ist die Planetengetriebestufe eingangsseitig und oder ausgangsseitig zu einer Kopplung mit zumindest einer weiteren Planetengetriebestufe vorgesehen. Unter einem "Planetenträger" soll insbesondere ein Element verstanden werden, das dazu vorgesehen ist, das zumindest eine Planetenrad auf einer Kreisbahn um das Sonnenrad zu führen. Vorzugsweise weist der Bolzen eine in einem montierten Zustand parallel zu einer gemeinsamen Drehachse von Sonnenrad, Hohlrad und Planetenträger angeordnete Drehachse auf. Vorzugsweise weist die Planetengetriebestufe eine Mehrzahl von Planetenrädern und eine Mehrzahl von zugeordneten Lagereinheiten auf, die in einer Umfangsrichtung des Planetenträgers verteilt an dem Planetenträger angeordnet sind. Es ist denkbar, dass die Planetenräder in Umfangsrichtung gleichmäßig verteilt angeordnet sind. Es ist ebenso denkbar, dass der Planetenträger unterschiedliche Winkelabstände zwischen den Planetenrädern aufweist.

In einer vorteilhaften Ausgestaltung ist die zumindest eine Lagereinheit als ein Wälzlager ausgebildet. Dadurch kann eine besonders reibungsarme Lagereinheit und eine besonders effiziente Planetengetriebestufe bereitgestellt werden. Vorzugsweise weist das Wälzlager eine Mehrzahl von Wälzkörpern auf, die in einem montierten Zustand zumindest teilweise in dem Planetenträger angeordnet sind, d.h. der Planetenträger und die Wälzkörper überlappen sich in axialer Richtung im Bereich der Lagereinheit.

In vorteilhafter Weise umfasst das Planetenrad einen Grundkörper und ein Bolzenelement, das den Bolzen ausbildet. Dadurch kann ein besonders einfaches und robustes Planetenrad bereitgestellt werden. Unter einem "Bolzenelement" soll in diesem Zusammenhang insbesondere ein länglich ausgebildetes Element verstanden werden, das in einer axialen Richtung über den Grundkörper des Planetenrads hinausgreift und dazu vorgesehen ist, das Planetenrad mit dem Planetenträger zu verbinden.

Ferner wird vorgeschlagen, dass der Grundkörper und das Bolzenelement kraft- und/oder formschlüssig zumindest drehfest miteinander verbunden sind. Dadurch kann ein Durchmesser des Planetenrads weitgehend unabhängig von der Lagereinheit gewählt werden, wodurch eine besonders vorteilhafte Übersetzung der Planetengetriebestufe erreicht und/oder eine besonders effiziente Planentengetriebestufe bereitgestellt werden kann. Darüber hinaus kann das Planetenrad besonders präzise relativ zu dem Planetenträger angeordnet werden. Es kann eine besonders präzise und langlebige Handwerkzeugmaschinengetriebeeinheit bereitgestellt werden. Vorzugsweise bilden der Grundkörper und das Bolzenelement für eine kraftschlüssige Verbindung eine Übermaßpassung, d.h. eine Presspassung aus und/oder das Bolzenelement greift für eine formschlüssige Verbindung in den Grundkörper ein und der Grundkörper und das Bolzenelement bilden eine Passverzahnung aus. Es ist ebenso denkbar, dass der Grundkörper und das Bolzenelement stoffschlüssig miteinander verbunden sind, d.h. beispielsweise durch einen Schweißprozess, einen Klebeprozess und/oder einen anderen, dem Fachmann als sinnvoll erscheinenden Prozess, und/oder vorteilhaft in einem Stück geformt, wie beispielsweise durch eine Herstellung aus einem Guss, durch Sintern, oder vorteilhaft aus einem einzelnen Rohling, d.h. das Planetenrad ist einteilig ausgebildet.

In einer vorteilhaften Ausgestaltung weist die zumindest eine Lagereinheit einen Innenring auf, der einstückig mit dem Bolzen ausgebildet ist. Dadurch kann eine besonders kompakte Lagereinheit und eine besonders kompakte Handwerkzeugmaschinengetriebeeinheit bereitgestellt werden. Vorzugsweise bildet der Bolzen eine glatte und/oder gehärtete radial innere Lauffläche für die Wälzkörper der Lagereinheit aus. "Radial" soll in diesem Zusammenhang bezogen auf die Drehachse der Lagereinheit verstanden werden.

Erfindungsgemäß weist die zumindest eine Lagereinheit einen Außenring auf, der einstückig mit dem Planetenträger ausgebildet ist. Dadurch kann eine Baugröße der Lagereinheit weiter reduziert werden und eine besonders kompakte Lagereinheit und eine besonders kompakte Handwerkzeugmaschinengetriebeeinheit bereitgestellt werden. Vorzugsweise bildet der Planetenträger eine glatte und/oder gehärtete radial äußere Lauffläche für die Wälzkörper der Lagereinheit aus.

Ferner wird vorgeschlagen, dass die zumindest eine Lagereinheit als ein Nadellager ausgebildet ist. Dadurch kann eine Baugröße der Lagereinheit weiter reduziert werden und eine besonders kompakte Lagereinheit und eine besonders kompakte Handwerkzeugmaschinengetriebeeinheit bereitgestellt werden. Unter einem Nadellager soll in diesem Zusammenhang insbesondere ein Wälzlager verstanden werden, dessen Wälzkörper als längliche Kreiszylinder ausgebildet sind. Vorzugsweise weist die Lagereinheit einen Nadelkranz auf, der einen Wälzkörperkäfig und die Wälzkörper umfasst. Es ist auch denkbar, dass die Wälzkörper unmittelbar benachbart zueinander in Umfangsrichtung angeordnet sind und der Wälzkörperkäfig entfällt.

In einer vorteilhaften Ausgestaltung ist die zumindest eine Lagereinheit als ein Kugellager ausgebildet. Dadurch kann eine besonders robuste Lagereinheit bereitgestellt werden.

In vorteilhafter Weise ist das Planetenrad als ein Zahnrad ausgebildet und weist einen Fußkreisdurchmesser auf und die Lagereinheit weist eine kreisförmige Lauf- und/oder Gleitbahn auf, deren Durchmesser mindestens 50 Prozent des Fußkreisdurchmessers des Planetenrads beträgt. Dadurch kann unabhängig von einer Erstreckung des Planetenrads in vorteilhafter Weise eine besonders reibungsarme und robuste Lagereinheit bereitgestellt werden. Unter einer "Gleitbahn" soll in diesem Zusammenhang insbesondere eine kreisförmige Bahn mit minimalem Durchmesser zwischen zwei Gleitflächen der Lagereinheit verstanden werden, von denen eine von dem Planetenrad und eine weitere von dem Bolzen ausgebildet wird. Unter einer "Laufbahn" soll in diesem Zusammenhang insbesondere eine Bahn verstanden werden, welche die Wälzkörper der Lagereinheit bei einem Umlauf und eine Drehachse der Lagereinheit beschreiben. Vorzugsweise ist die Laufbahn durch die Bahn eines jeweils zentralen Punktes bestimmt, der mittig zwischen der radial inneren und der radial äußeren Lauffläche der Lagereinheit für die Wälzkörper angeordnet ist.

Ferner wird eine Handwerkzeugmaschinenvorrichtung, insbesondere Elektrohandwerkzeugmaschinenvorrichtung, vorgeschlagen, mit zumindest einer erfindungsgemäßen Handwerkzeugmaschinengetriebeeinheit, die zumindest zwei analog zueinander ausgebildete Planetengetriebestufen aufweist. Dadurch kann eine besonders effiziente, kompakte und/oder leichte Handwerkzeugmaschinenvorrichtung bereitgestellt werden. Reibungsverluste können minimiert werden. Es kann eine Handwerkzeugmaschinenvorrichtung mit hohem Bedienkomfort bereitgestellt werden.

Die erfindungsgemäße Handwerkzeugmaschinengetriebeeinheit soll hierbei nicht auf die oben beschriebene Anwendung und Ausführungsform beschränkt sein. Insbesondere kann die erfindungsgemäße Handwerkzeugmaschinengetriebeeinheit zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In den Zeichnungen sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Handwerkzeugmaschinenvorrichtung mit einer erfindungsgemäßen Handwerkzeugmaschinengetriebeeinheit,
- Fig. 2: einen Längsschnitt durch die Handwerkzeugmaschinengetriebeeinheit entlang einer Werkzeugdrehachse,
- Fig.3: einen Schnitt entlang der Linie III aus Figur 2 in axialer Richtung durch einen Planetenträger der Handwerkzeugmaschinengetriebeeinheit,
- Fig. 4: eine Detailansicht für einen Ausschnitt IV des Schnitts,
- Fig.5: einen Schnitt entlang der Linie III in axialer Richtung durch einen Planetenträger für ein weiteres Ausführungsbeispiel,
- Fig. 6: eine Detailansicht für einen Ausschnitt VI des Schnitts,
- Fig. 7: eine teilgeschnittene Seitenansicht eines Planetenträgers für ein Ausführungsbeispiel mit einem Nadellager
- Fig. 8: und eine teilgeschnittene Seitenansicht eines Planetenträgers für ein Ausführungsbeispiel mit einem Kugellager.

### Beschreibung der Ausführungsbeispiele

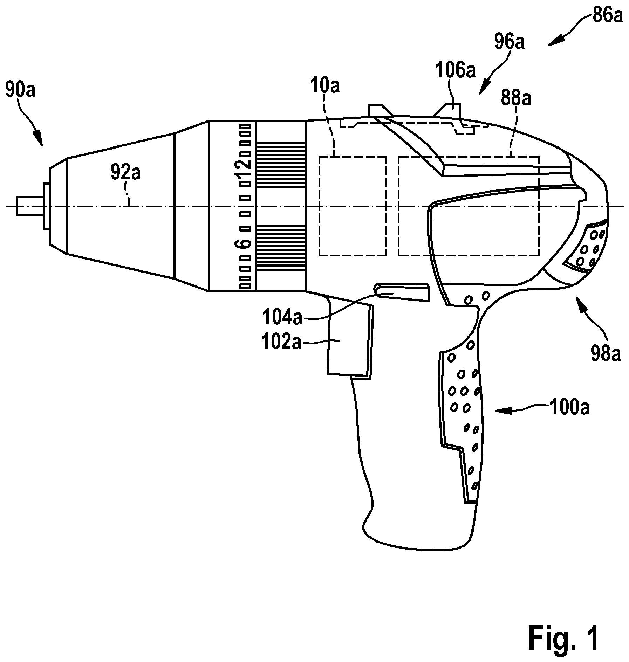

Figuren 1 bis 4 zeigen eine Handwerkzeugmaschinenvorrichtung 86a, die in dem vorliegenden Ausführungsbeispiel als ein Akku-Zweigang-Schlagbohrschrauber ausgebildet ist. Die Handwerkzeugmaschinenvorrichtung 86a umfasst einen elektrischen Antriebsmotor 88a, eine Handwerkzeugmaschinengetriebeeinheit 10a sowie eine Werkzeugaufnahme 90a. Die Handwerkzeugmaschinenvorrichtung 86a weist eine Werkzeugdrehachse 92a auf. Der Antriebsmotor 88a, die Handwerkzeugmaschinengetriebeeinheit 10a, und die Werkzeugaufnahme 90a sind entlang der Werkzeugdrehachse 92a hintereinander angeordnet. Die Werkzeugaufnahme 90a begrenzt die Handwerkzeugmaschinenvorrichtung 86a in einer Arbeitsrichtung der Handwerkzeugmaschinenvorrichtung 86a. Die Handwerkzeugmaschinengetriebeeinheit 10a ist zwischen dem Antriebsmotor 88a und der Werkzeugaufnahme 90a angeordnet. Die Handwerkzeugmaschinengetriebeeinheit 10a umfasst eine an den Antriebsmotor 88a anbindbare nicht näher dargestellte Getriebeeingangswelle und eine an die Werkzeugaufnahme 90a anbindbare Getriebeausgangswelle 94a. Der Antriebsmotor 88a ist dazu vorgesehen, zu einem Antrieb eines Werkzeugs elektrische Energie in eine Drehbewegung umzuwandeln. Die Handwerkzeugmaschinengetriebeeinheit 10a ist dazu vorgesehen, zumindest in einem Betriebszustand, ein Eingangsdrehmoment in ein Ausgangsdrehmoment zu wandeln und/oder eine Eingangsdrehzahl in eine Ausgangsdrehzahl zu wandeln.

Die Handwerkzeugmaschinenvorrichtung 86a umfasst ein Gehäuse 96a, das den Antriebsmotor 88a und die Handwerkzeugmaschinengetriebeeinheit 10a lagert und vor Umwelteinflüssen schützt. Das Gehäuse 96a umfasst ein Antriebsgehäuseteil 98a das eine zylindrische Grundform aufweist und in dem der Antriebsmotor 88a und die Handwerkzeugmaschinengetriebeeinheit 10a angeordnet sind. Das Gehäuse 96a bildet ferner einen Haltegriff 100a der Handwerkzeugmaschinenvorrichtung 86a aus, der bezogen auf die Werkzeugdrehachse 92a seitlich an dem Antriebsgehäuseteil 98a angeordnet ist. Der Haltegriff 100a ist für eine Handhabung der Handwerkzeugmaschinenvorrichtung 86a durch einen Benutzer zu einem Betrieb der Handwerkzeugmaschinenvorrichtung 86a vorgesehen.

Die Handwerkzeugmaschinenvorrichtung 86a umfasst eine Schaltvorrichtung, die als eine Ein-/Ausschaltvorrichtung ausgebildet ist, und dazu vorgesehen ist, den Antriebsmotor 88a der Handwerkzeugmaschinenvorrichtung 86a zu einem Betrieb mit einer nicht näher dargestellten Energiequelle zu verbinden. In dem vorliegenden Ausführungsbeispiel ist die Schaltvorrichtung dazu vorgesehen, ein Drehmoment und/oder eine Drehzahl stufenlos einzustellen. Grundsätzlich ist es denkbar, das die Schaltvorrichtung dazu vorgesehen ist, das Drehmoment und/oder die Drehzahl stufenweise einzustellen und/oder das Drehmoment und/oder die Drehzahl zwischen einem Wert von Null und einem Maximalwert einzustellen. Die Schaltvorrichtung weist ein Bedienelement 102a auf, das zu einer Betätigung durch den Benutzer arbeitsrichtungsseitig, d.h. an einer der Werkzeugaufnahme 90a zugewandten Seite des Haltegriffs 100a angeordnet ist.

Die Handwerkzeugmaschinenvorrichtung 86a ist in dem vorliegenden Ausführungsbeispiel zu einem Betrieb in zwei zueinander entgegengesetzten Drehrichtungen vorgesehen. Die Handwerkzeugmaschinenvorrichtung 86a umfasst eine Schaltvorrichtung, die als eine Drehrichtungsschaltvorrichtung ausgebildet ist. Die Drehrichtungsschaltvorrichtung weist ein Schiebebedienelement 104a auf, das senkrecht zu der Werkzeugdrehachse 92a verschiebbar an einem Übergang zwischen dem Antriebsgehäuseteil 98a und dem Haltegriff 100a angeordnet ist. Das Schiebebedienelement 104a durchdringt in einem montierten Zustand das Gehäuse 96a in einer Richtung senkrecht zu der Werkzeugdrehachse 92a.

Die Handwerkzeugmaschinengetriebeeinheit 10a weist in dem vorliegenden Ausführungsbeispiel zwei Übersetzungsstufen auf, die jeweils ein Drehzahlverhältnis zwischen der Getriebeausgangswelle 94a und der Getriebeeingangswelle festlegen. Die Handwerkzeugmaschinengetriebeeinheit 10a ist schaltbar ausgebildet und weist zwei Schaltstellungen auf, die jeweils einer der Übersetzungsstufen zugeordnet sind. Die Handwerkzeugmaschinenvorrichtung 86a umfasst eine Getriebeschaltvorrichtung zur Schaltung der Handwerkzeugmaschinengetriebeeinheit 10a zwischen den beiden Schaltstellungen. Die Getriebeschaltvorrichtung weist ein Schiebebedienelement 106a auf. Das Schiebebedienelement 106a ist an einer dem Haltegriff 100a abgewandten Seite des Antriebsgehäuseteils 98a angeordnet und parallel zu der Werkzeugdrehachse 92a verschiebbar zu einer Betätigung durch den Benutzer gelagert. Das Schiebebedienelement 106a weist zwei Schaltstellungen auf, die jeweils einer der Schaltstellungen der Handwerkzeugmaschinengetriebeeinheit 10a zugeordnet sind.

Die Handwerkzeugmaschinengetriebeeinheit 10a ist als ein Mehrstufenplanetengetriebe ausgebildet und weist in dem vorliegenden Ausführungsbeispiel drei Planetengetriebestufen 12a, 14a, 16a auf. Die Planetengetriebestufen 12a, 14a, 16a sind entlang der Werkzeugdrehachse 92a nacheinander gestaffelt angeordnet, d.h. eine erste der Planetengetriebestufen 12a ist mit einer weiteren der Planetengetriebestufen 14a und die weitere Planetengetriebestufe 14a ist mit einer dritten der Planetengetriebestufen 16a gekoppelt. Die erste Planetengetriebestufe 12a weist einen Planetenträger 18a, eine Mehrzahl drehbar zu dem Planetenträger 18a gelagerte Planetenräder 24a, 26a, 28a und eine Mehrzahl von Lagereinheiten 38a, 40a, 42a auf, die dazu vorgesehen sind, jeweils eines der Planetenräder 24a, 26a, 28a drehbar zu dem Planetenträger 18a zu lagern. In dem vorliegenden Ausführungsbeispiel weist die erste Planetengetriebestufe 12a drei Planetenräder 24a, 26a, 28a und drei Lagereinheiten 38a, 40a, 42a auf. Die erste Planetengetriebestufe 12a umfasst ferner ein zentral angeordnetes, nicht näher dargestelltes Sonnenrad und ein gehäusefest angeordnetes Hohlrad 108a. Das Sonnenrad, der Planetenträger 18a und das Hohlrad 108a weisen eine gemeinsame Drehachse auf, die in einem montierten Zustand mit der Werkzeugdrehachse 92a zusammenfällt. Das Sonnenrad, der Planetenträger 18a und das Hohlrad 108a sind koaxial zueinander angeordnet. Das Hohlrad 108a ist in dem vorliegenden Ausführungsbeispiel gehäusefest angeordnet und von dem Antriebsgehäuseteil 98a ausgebildet. Das Sonnenrad ist dazu vorgesehen, ein Drehmoment des Antriebsmotors 88a in die Handwerkzeugmaschinengetriebeeinheit 10a einzuleiten. Es ist denkbar, dass das Sonnenrad einstückig mit der Getriebeeingangswelle ausgebildet ist. Das Sonnenrad ist als ein Zahnrad ausgebildet und weist eine Außenverzahnung auf. Das Sonnenrad ist als ein Stirnrad ausgebildet. Die Planetenräder 24a, 26a, 28a sind jeweils als Zahnräder ausgebildet und weisen jeweils eine Außenverzahnung mit einem Fußkreisdurchmesser auf. Die Planetenräder 24a, 26a, 28a sind als Stirnräder ausgebildet. Das Sonnenrad und die Planetenräder 24a, 26a, 28a kämmen in einem Betriebszustand der Handwerkzeugmaschinenvorrichtung 86a miteinander. Die Planetenräder 24a, 26a, 28a sind dazu vorgesehen, ein Drehmoment auf den Planetenträger 18a zu übertragen. Der Planetenträger 18a ist dazu vorgesehen, ein Drehmoment aus der ersten Planetengetriebestufe 12a auszuleiten. Das Hohlrad 108a weist eine Innenverzahnung auf. Das Hohlrad 108a und die Planetenräder 24a, 26a, 28a kämmen in einem Betriebszustand miteinander.

Die weitere Planetengetriebestufe 14a weist analog zu der ersten Planetengetriebestufe 12a einen Planetenträger 20a, drei drehbar zu dem Planetenträger 20a gelagerte Planetenräder 30a, 32a, und drei Lagereinheiten 44a auf, die dazu vorgesehen sind, jeweils eines der Planetenräder 30a, 32a drehbar zu dem Planetenträger 20a zu lagern. Die weitere Planetengetriebestufe 14a umfasst ferner ein zentral angeordnetes Sonnenrad 110a. Der Planetenträger 18a der ersten Planetengetriebestufe 12a und das Sonnenrad 110a der weiteren Planetengetriebestufe 14a sind drehfest miteinander verbunden. Der Planetenträger 18a der ersten Planetengetriebestufe 12a und das Sonnenrad 110a der zweiten Planetengetriebestufe 14a sind einstückig miteinander ausgebildet. Das Sonnenrad 110a ist dazu vorgesehen, ein Drehmoment in die weitere Planetengetriebestufe 14a einzuleiten. Das Sonnenrad 110a ist als ein Zahnrad ausgebildet und weist eine Außenverzahnung auf. Das Sonnenrad 110a ist als ein Stirnrad ausgebildet.

Die Planetenräder 30a, 32a sind jeweils als Zahnräder ausgebildet und weisen jeweils eine Außenverzahnung mit einem Fußkreisdurchmesser auf. Die Planetenräder 30a, 32a sind als Stirnräder ausgebildet. Das Sonnenrad 110a und die Planetenräder 30a, 32a kämmen in einem Betriebszustand der Handwerkzeugmaschinenvorrichtung 86a miteinander. Die Planetenräder 30a, 32a sind dazu vorgesehen, ein Drehmoment auf den Planetenträger 18a zu übertragen. Der Planetenträger 20a ist dazu vorgesehen, eine Drehbewegung aus der zweiten Planetengetriebestufe 14a auszuleiten. Die weitere Planetengetriebestufe 14a umfasst ein Hohlrad 112a. Das Sonnenrad 110a, der Planetenträger 20a und das Hohlrad 112a weisen eine gemeinsame Drehachse auf, die in einem montierten Zustand mit der Werkzeugdrehachse 92a zusammenfällt. Das Sonnenrad 110a, der Planetenträger 20a und das Hohlrad 112a sind koaxial zueinander angeordnet. Das Hohlrad 112a weist eine Innenverzahnung auf. Das Hohlrad 112a und die Planetenräder 30a, 32a kämmen in einem Betriebszustand miteinander. Das Hohlrad 112a ist dazu vorgesehen, in zumindest einem Betriebszustand ein Drehmoment auf die Planetenräder 30a, 32a zu übertragen. Das Hohlrad 112a ist als ein Schalthohlrad ausgebildet. Das Hohlrad 112a bildet ein Schaltelement der Getriebeschaltvorrichtung aus und ist dazu vorgesehen, eine gewünschte Übersetzungsstufe der Handwerkzeugmaschinengetriebeeinheit 10a einzustellen.

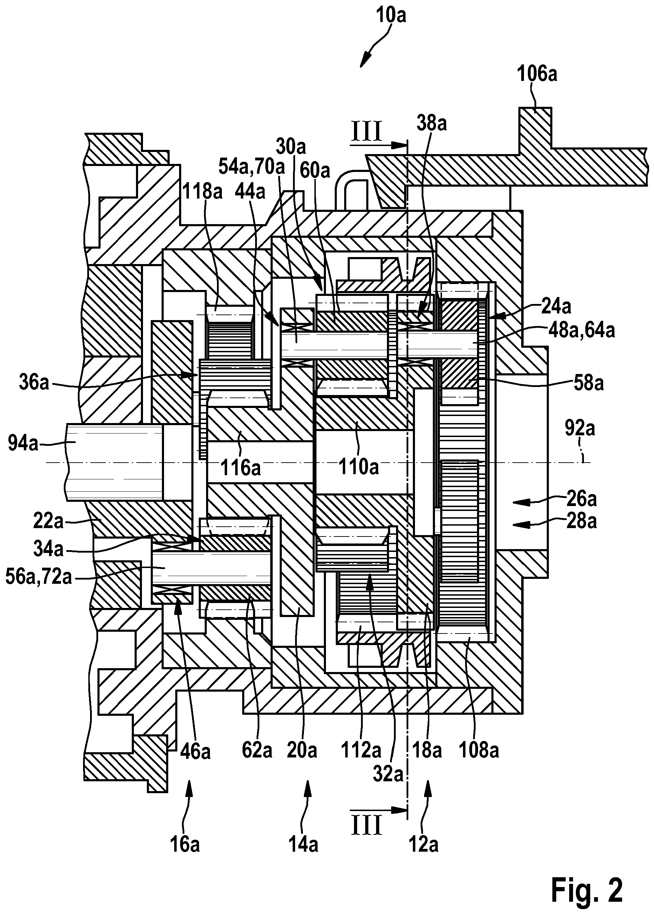

Die Getriebeschaltvorrichtung weist zwei Schaltzustände auf, die zwei unterschiedlichen Übersetzungsstufen der Handwerkzeugmaschinengetriebeeinheit 10a entsprechen. Das Hohlrad 112a weist an einer der Getriebeausgangswelle 94a zugewandten Seite Eingriffsmittel auf, welche dazu vorgesehen sind, das Hohlrad 112a in einem ersten Schaltzustand drehfest mit dem Antriebsgehäuseteil 98a zu verbinden. In dem ersten Schaltzustand ist das Hohlrad 112a gehäusefest angeordnet. Der Planetenträger 18a der ersten Planetengetriebestufe 12a und damit das Sonnenrad 110a der weiteren Planetengetriebestufe 12a sind in dem ersten Schaltzustand gegenüber dem Hohlrad 112a drehbar. In einem Betriebszustand kämmen in dem ersten Schaltzustand die Planetenräder 30a, 32a mit dem Hohlrad 112a. Der Planetenträger 20a der weiteren Planetengetriebestufe 14a weist eine von einer Drehzahl des Sonnenrads 110a verschiedene Drehzahl auf. Figur 2 zeigt einen weiteren Schaltzustand, in dem das Hohlrad 112a gegenüber einer Position in dem ersten Schaltzustand axial entlang der Werkzeugdrehachse 92a verschoben angeordnet ist. Das Hohlrad 112a weist im Vergleich zu dem ersten Schaltzustand einen größeren Abstand zu der Getriebeausgangswelle 94a auf und die Eingriffsmittel des Hohlrads 112a sind von dem Antriebsgehäuseteil 98a gelöst. Das Hohlrad 112a ist drehfest mit dem Planetenträger 18a der ersten Planetengetriebestufe 12a und damit drehfest mit dem Sonnenrad 110a der weiteren Planetengetriebestufe 14a verbunden. Der Planetenträger 18a weist eine Außenverzahnung 114a auf, die dazu vorgesehen ist, in dem weiteren Schaltzustand mit einer entsprechenden Innenverzahnung des Hohlrads 112a zusammenzuwirken und den Planetenträger 18a drehfest mit dem Hohlrad 112a zu verbinden. In dem weiteren Schaltzustand weisen in einem Betriebszustand das Hohlrad 112a, das Sonnenrad 110a und der Planetenträger 18a der weiteren Planetengetriebestufe 14a eine gleiche Drehzahl auf.

Die dritte Planetengetriebestufe 16a weist analog zu der ersten Planetengetriebestufe 12a und der weiteren Planetengetriebestufe 14a einen Planetenträger 22a, drei drehbar zu dem Planetenträger 22a gelagerte Planetenräder 34a, 36a und drei Lagereinheiten 46a auf, die dazu vorgesehen sind, jeweils eines der Planetenräder 34a, 36a drehbar zu dem Planetenträger 22a zu lagern. Die dritte Planetengetriebestufe 16a umfasst ferner ein zentral angeordnetes Sonnenrad 116a. Der Planetenträger 22a der weiteren Planetengetriebestufe 16a und das Sonnenrad 116a der dritten Planetengetriebestufe 16a sind drehfest miteinander verbunden. Der Planetenträger 22a der weiteren Planetengetriebestufe 16a und das Sonnenrad 116a der dritten Planetengetriebestufe 16a sind einstückig miteinander ausgebildet. Das Sonnenrad 116a ist dazu vorgesehen, eine Drehbewegung in die dritte Planetengetriebestufe 16a einzuleiten. Das Sonnenrad 116a ist als ein Zahnrad ausgebildet und weist eine Außenverzahnung auf. Das Sonnenrad 116a ist als ein Stirnrad ausgebildet. Die Planetenräder 34a, 36a sind jeweils als Zahnräder ausgebildet und weisen jeweils eine Außenverzahnung 114a mit einem Fußkreisdurchmesser auf. Die Planetenräder 34a, 36a sind als Stirnräder ausgebildet. Das Sonnenrad 116a und die Planetenräder 34a, 36a kämmen in einem Betriebszustand der Handwerkzeugmaschinenvorrichtung 86a miteinander. Die Planetenräder 34a, 36a sind dazu vorgesehen, eine Drehbewegung auf den Planetenträger 22a zu übertragen. Der Planetenträger 22a ist dazu vorgesehen, ein Drehmoment aus der dritten Planetengetriebestufe 16a auszuleiten und ist drehfest mit der Getriebeausgangswelle 94a verbunden. Die dritte Planetengetriebestufe 16a umfasst ein Hohlrad 118a. Das Sonnenrad 116a, der Planetenträger 22a und das Hohlrad 118a weisen jeweils eine gemeinsame Drehachse auf, die in einem montierten Zustand mit der Werkzeugdrehachse 92a zusammenfällt. Das Sonnenrad 116a, der Planetenträger 22a und das Hohlrad 118a sind koaxial zueinander angeordnet. Das Hohlrad 118a weist eine Innenverzahnung auf. Das Hohlrad 118a und die Planetenräder 34a, 36a kämmen in einem Betriebszustand miteinander.

Die Planetenräder 24a, 26a, 28a, 30a, 32a, 34a, 36a sind zumindest in Bezug auf eine Lagerung analog zueinander ausgebildet, weshalb im Folgenden nur die Planetenräder 24a, 26a, 28a und die Lagereinheiten 38a, 40a, 42a der ersten Planetengetriebestufe 12a näher beschrieben sind. Die Planetenräder 24a, 26a, 28a sind in dem vorliegenden Ausführungsbeispiel in einer Umfangsrichtung des Planetenträgers 18a gleichmäßig verteilt in einem gleichen radialen Abstand von der Drehachse des Planetenträgers 18a an dem Planetenträger 18a angeordnet. Die Planetenräder 24a, 26a, 28a weisen in der Umfangsrichtung des Planetenträgers 18a einen Abstand von 120 Grad zu einem jeweils benachbarten Planetenrad 36a auf. Die Planetenräder 24a, 26a, 28a umfassen jeweils einen Bolzen 48a, 50a, 52a, den jeweils eine dem Planetenrad 24a, 26a, 28a zugeordnete Lagereinheit 38a, 40a, 42a drehbar in dem Planetenträger 18a lagert. Die Bolzen 48a, 50a, 52a der Planetenräder 24a, 26a, 28a sind dazu vorgesehen, die Planetenräder 24a, 26a, 28a mit dem Planetenträger 18a zu verbinden und ein Drehmoment auf den Planetenträger 18a zu übertragen. Die Lagereinheiten 38a, 40a, 42a sind jeweils als ein Wälzlager ausgebildet. Die Lagereinheiten 38a, 40a, 42a sind analog zueinander ausgebildet. Die Lagereinheiten 38a, 40a, 42a weisen jeweils einen Innenring 74a, 76a, 78a und jeweils einen Außenring 80a, 82a, 84a auf sowie jeweils eine Mehrzahl von Wälzkörpern 120a, 122a, 124a, die in radialer Richtung zwischen dem Innenring 74a, 76a, 78a und dem Außenring 80a, 82a, 84a angeordnet sind. Die Innenringe 74a, 76a, 78a bilden jeweils eine innere Lauffläche 126a aus und die Außenringe 80a, 82a, 84a bilden jeweils eine äußere Lauffläche 128a aus. In einem Betriebszustand rollen die Wälzkörper 120a, 122a, 124a auf den inneren Laufflächen 126a und auf den äußeren Laufflächen 128a ab. Die Innenringe 74a, 76a, 78a und die Außenringe 80a, 82a, 84a sind in axialer Richtung innerhalb einer axialen Erstreckung des Planetenträgers 18a angeordnet.

Die Planetenräder 24a, 26a, 28a umfassen jeweils einen Grundkörper 58a und ein Bolzenelement 64a, 66a, 68a, das den Bolzen 48a, 50a, 52a ausbildet. Analog weisen die Planetenräder 30a, 32a der weiteren Planetengetriebestufe 14a und die Planetenräder 34a, 36a der dritten Planetengetriebestufe 16a jeweils einen Grundkörper 60a, 62a und ein Bolzenelement 70a, 72a auf, das einen Bolzen 54a, 56a ausbildet. Im Folgenden wird stellvertretend eine erste der Lagereinheiten 38a und ein erstes der Lagereinheit 38a zugeordnetes Planetenrad 24a der ersten Planetengetriebestufe 12a näher beschrieben. Die weiteren Lagereinheiten 40a, 40a und die Planetenräder 26a, 28a sind analog ausgebildet Das Planetenrad 24a weist eine Drehachse auf, die parallel zu der Werkzeugdrehachse 92a angeordnet ist. Der Grundkörper 58a des Planetenrads 24a ist scheibenförmig ausgebildet und trägt die Außenverzahnung des Planetenrads 24a. Das Bolzenelement 64a ist zentral in dem Grundkörper 58a angeordnet. Das Bolzenelement 64a und der Grundkörper 58a sind koaxial zu der Drehachse des Planetenrads 24a angeordnet. Das Bolzenelement 64a durchdringt in einem montierten Zustand den Grundkörper 58a des Planetenrads 24a und den Planetenträger 18a. Eine Länge des Bolzenelements 64a entspricht jeweils mindestens einer Summe aus einer axialen Erstreckung des Planetenträgers 18a und einer axialen Erstreckung des Grundkörpers 58a im Bereich der Lagereinheit 38a. Es ist auch denkbar, dass eine Länge des Bolzenelements 64a kleiner ist als die Summe aus der axialen Erstreckung des Planetenträgers 18a und einer axialen Erstreckung des Grundkörpers 58a und dass das Bolzenelement 64a lediglich in den Grundkörper 58a des Planetenrads 24a eingreift. Der Grundkörper 58a und das Bolzenelement 64a sind kraftschlüssig drehfest miteinander verbunden. Der Grundkörper 58a und das Bolzenelement 64a sind schiebefest miteinander verbunden. Das Bolzenelement 64a ist in einem montierten Zustand in den Grundkörper 58a eingepresst. Der Grundkörper 58a weist eine zentrale Bohrung zur Aufnahme des Bolzenelements 64a auf.

Der Innenring 74a der Lagereinheit 38a ist einstückig mit dem Bolzen 48a ausgebildet, d.h. der Bolzen 48a bildet die innere Lauffläche 126a der Lagereinheit 38 aus, die in einem Betriebszustand mit den Wälzkörpern 120a in Kontakt ist und die Wälzkörper 120a führt. Der Außenring 80a der Lagereinheit 38a ist einstückig mit dem Planetenträger 18a ausgebildet, d.h. der Planetenträger 18a bildet die äußere Lauffläche 128a der Lagereinheit 38 aus, die in einem Betriebszustand mit den Wälzkörpern 120a in Kontakt ist und die Wälzkörper 120a führt. Der Planetenträger 18a weist eine Mehrzahl von Ausnehmungen 130a mit einem kreisförmigen Querschnitt in axialer Richtung sowie eine zentrale Bohrung 144a auf. Die Ausnehmungen 130a sind in einem kreisringförmigen Bereich in Umfangsrichtung verteilt angeordnet. Eine Masse des Planetenträgers 18a ist durch die Ausnehmungen 130a vermindert. Der Planetenträger 18a weist in Bezug auf eine Anordnung der Lagereinheiten 38a, 40a, 42a und der Ausnehmungen 130a eine dreizählige Symmetrie in Bezug auf die Werkzeugdrehachse 92a auf.

Die Lagereinheit 38a weist eine Laufbahn für die Wälzkörper 120a auf, entlang deren sich die Wälzkörper 120a in einem Betriebszustand bewegen. Die Laufbahn ist kreisförmig ausgebildet und konzentrisch zu den Bolzen 48a und der Drehachse des Planetenrads 24a angeordnet, das der Lagereinheit 38a zugeordnet ist. Die Laufbahn weist einen Durchmesser auf, der etwa 60 Prozent des Fußkreisdurchmessers des Planetenrads 24a beträgt.

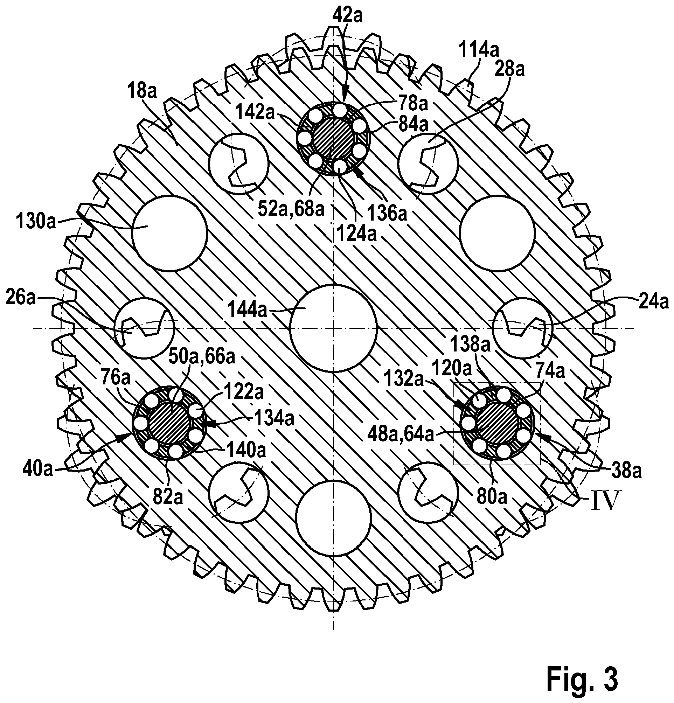

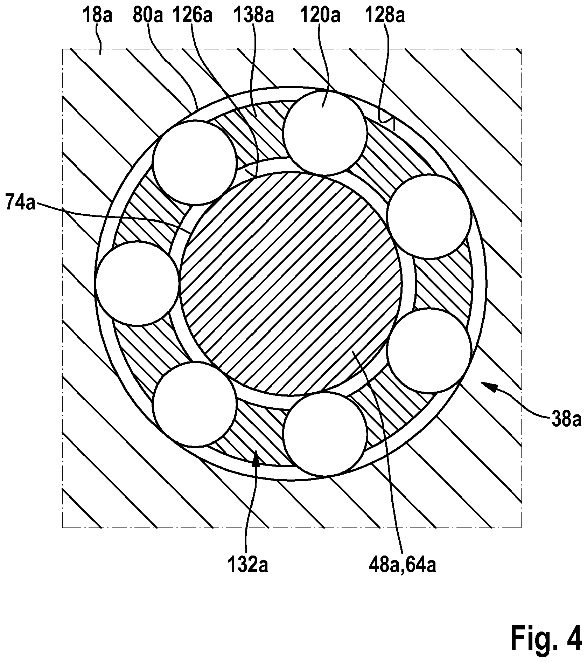

Die Lagereinheiten 38a, 40a, 42a weisen in dem vorliegenden Ausführungsbeispiel jeweils einen Wälzkörperkäfig 132a, 134a, 136a auf, der dazu vorgesehen ist, einen Abstand der Wälzkörper 120a, 122a, 124a in Umfangsrichtung zueinander festzulegen und die Wälzkörper 120a, 122a, 124a bei einer Drehung der Außenringe 80a, 82a, 84a gegenüber den Innenringen 74a, 76a, 78a zu führen. Die Wälzkörperkäfige 132a, 134a, 136a weisen eine Mehrzahl von Stegelementen 138a, 140a, 142a auf, die jeweils zwischen zwei Wälzkörpern 120a, 122a, 124a angeordnet sind. Eine Anzahl der Stegelemente 138a, 140a, 142a entspricht jeweils einer Anzahl der Wälzkörper 120a, 122a, 124a (Figur 3 und Figur 4).

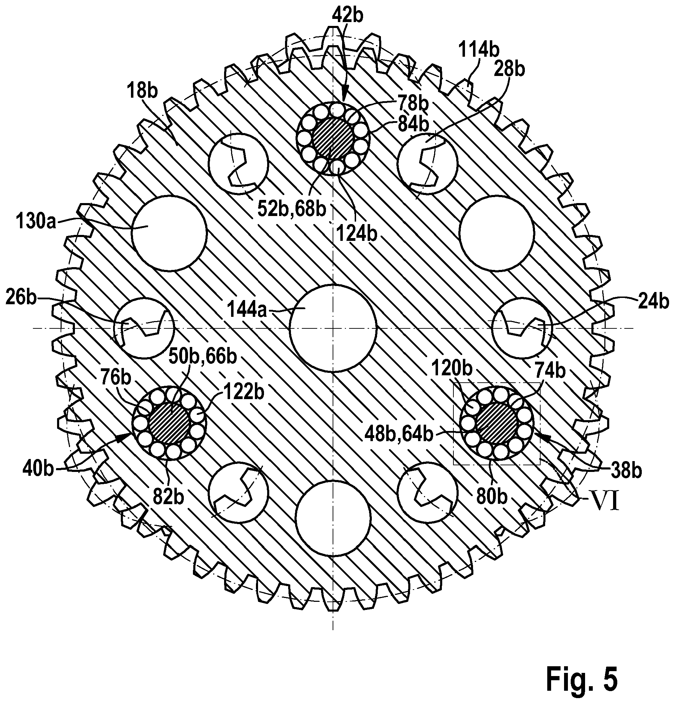

In den Figuren 5 bis 8 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 bis 8 ist der Buchstabe a durch die Buchstaben b, c, und d ersetzt.

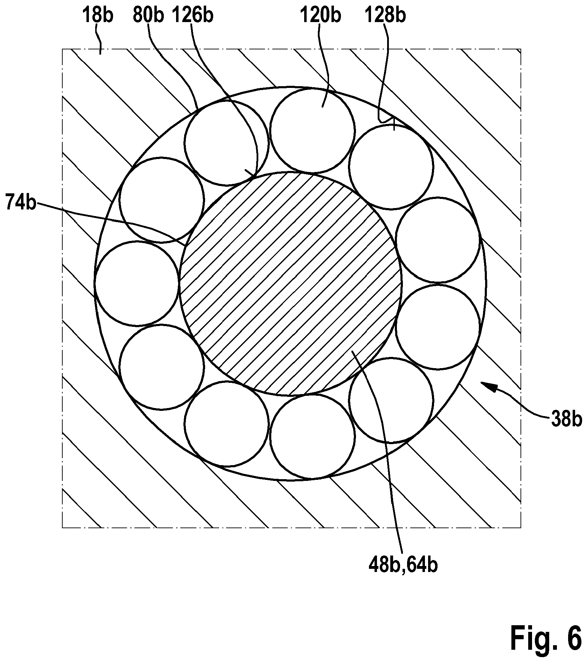

Die Figuren 5 und 6 zeigen einen Planetenträger 18b einer Planetengetriebestufe für eine Handwerkzeugmaschinengetriebeeinheit. Die Handwerkzeugmaschinengetriebeeinheit ist analog zu dem vorangehenden Ausführungsbeispiel für eine nicht näher dargestellte Handwerkzeugmaschinenvorrichtung vorgesehen. Die Handwerkzeugmaschinenvorrichtung weist eine Werkzeugaufnahme, beispielsweise für eine Schraubendreherklinge oder einen Bohrer auf. Die Handwerkzeugmaschine weist eine Werkzeugdrehachse auf.

Die Handwerkzeugmaschinengetriebeeinheit ist analog zu dem vorangehenden Ausführungsbeispiel als ein Mehrstufenplanetengetriebe ausgebildet und weist drei Planetengetriebestufen auf. Die Planetengetriebestufen sind entlang der Werkzeugdrehachse nacheinander gestaffelt angeordnet, d.h. eine erste der Planetengetriebestufen ist mit einer weiteren der Planetengetriebestufen und die weitere Planetengetriebestufe ist mit einer dritten der Planetengetriebestufen gekoppelt. Die erste Planetengetriebestufe weist einen Planetenträger 18b, eine Mehrzahl drehbar zu dem Planetenträger 18b gelagerte Planetenräder 24b, 26b, 28b und eine Mehrzahl von Lagereinheiten 38b, 40b, 42b auf, die dazu vorgesehen sind, jeweils eines der Planetenräder 24b, 26b, 28b drehbar zu dem Planetenträger 18b zu lagern. Die erste Planetengetriebestufe umfasst ferner ein zentral angeordnetes, nicht näher dargestelltes Sonnenrad und ein gehäusefest angeordnetes Hohlrad.

Die Planetenräder 24b, 26b, 28b sind in dem vorliegenden Ausführungsbeispiel in einer Umfangsrichtung des Planetenträgers 18b gleichmäßig verteilt in einem gleichen radialen Abstand von den der Drehachse des Planetenträgers 18a an dem Planetenträger 18b angeordnet. Die Planetenräder 24b, 26b, 28b weisen in der Umfangsrichtung des Planetenträgers 18b einen Abstand von 120 Grad zu einem jeweils benachbarten Planetenrad 24b, 26b, 28b auf. Die Planetenräder 24b, 26b, 28b umfassen jeweils einen Bolzen 48b, 50b, 52b, den jeweils eine dem Planetenrad 24b, 26b, 28b zugeordnete Lagereinheit 38b, 40b, 42b drehbar in dem Planetenträger 18b lagert. Die Bolzen 48b, 50b, 52b der Planetenräder 24b, 26b, 28b sind dazu vorgesehen, die Planetenräder 24b, 26b, 28b mit dem Planetenträger 18b zu verbinden und ein Drehmoment auf den Planetenträger 18b zu übertragen. Die Lagereinheiten 38b, 40b, 42b sind jeweils als ein Wälzlager ausgebildet. Die Lagereinheiten 38b, 40b, 42b sind analog zueinander ausgebildet. Die Lagereinheiten 38b, 40b, 42b weisen jeweils einen Innenring 74b, 76b, 78b und jeweils einen Außenring 80b, 82b, 84b auf, sowie jeweils eine Mehrzahl von Wälzkörpern 120b, 122b, 124b, die in radialer Richtung zwischen dem Innenring 74b, 76b, 78b und dem Außenring 80b, 82b, 84b angeordnet sind. Die Innenringe 74b, 76b, 78b bilden jeweils eine innere Lauffläche 126b aus und die Außenringe 80b, 82b, 84b bilden jeweils eine äußere Lauffläche 128b aus. In einem Betriebszustand rollen die Wälzkörper 120a, 122a, 124a jeweils auf den inneren Laufflächen 126b und auf den äußeren Laufflächen 128b ab. Die Innenringe 74b, 76b, 78b und die Außenringe 80b, 82b, 84b sind in axialer Richtung innerhalb einer axialen Erstreckung des Planetenträgers 18b angeordnet.

Die Planetenräder 24b, 26b, 28b umfassen jeweils einen Grundkörper und ein Bolzenelement 64b, 66b, 68b, das den Bolzen 48b, 50b, 52b ausbildet. Die Planetenräder 24b, 26b, 28b weisen jeweils eine Drehachse auf, die jeweils parallel zu der Werkzeugdrehachse angeordnet ist.

Die Innenringe 74b, 76b, 78b der Lagereinheiten 38b, 40b, 42b sind jeweils einstückig mit den Bolzen 48b, 50b, 52b ausgebildet, d.h. die Bolzen 48b, 50b, 52b bilden jeweils die inneren Lauffläche 126b der Lagereinheiten 38b, 40b, 42b aus, die in einem Betriebszustand mit den Wälzkörpern 120b, 122b, 124b in Kontakt sind und die Wälzkörper 120a, 122a, 124a führen. Die Außenringe 80b, 82b, 84b der Lagereinheiten 38b, 40b, 42b sind jeweils einstückig mit dem Planetenträger 18b ausgebildet, d.h. der Planetenträger 18b bildet die äußeren Laufflächen 128b der Lagereinheiten 38b, 40b, 42b aus, die in einem Betriebszustand mit den Wälzkörpern 120b, 122b, 124b in Kontakt sind und die Wälzkörper 120a, 122a, 124a führen. Der Planetenträger 18b weist eine Mehrzahl von Ausnehmungen 130b mit einem kreisförmigen Querschnitt in axialer Richtung sowie eine zentrale Bohrung 144b auf.

Die Wälzkörper 120b, 122b, 124b sind im Unterschied zu dem vorangehenden Ausführungsbeispiel unmittelbar benachbart zueinander in Umlaufrichtung angeordnet. Die Wälzkörper 120b, 122b, 124b füllen jeweils einen Raum zwischen den Innenringen 74b, 76b, 78b und den Außenringen 80b, 82b, 84b zumindest im Wesentlichen vollständig aus, d.h. ein Mittelwert aus einem Umfang der jeweils inneren Laufflächen 126b und einem Umfang der jeweils äußeren Laufflächen 128b entspricht in etwa einer Summe der Durchmesser der Wälzkörper 120b, 122b, 124b.

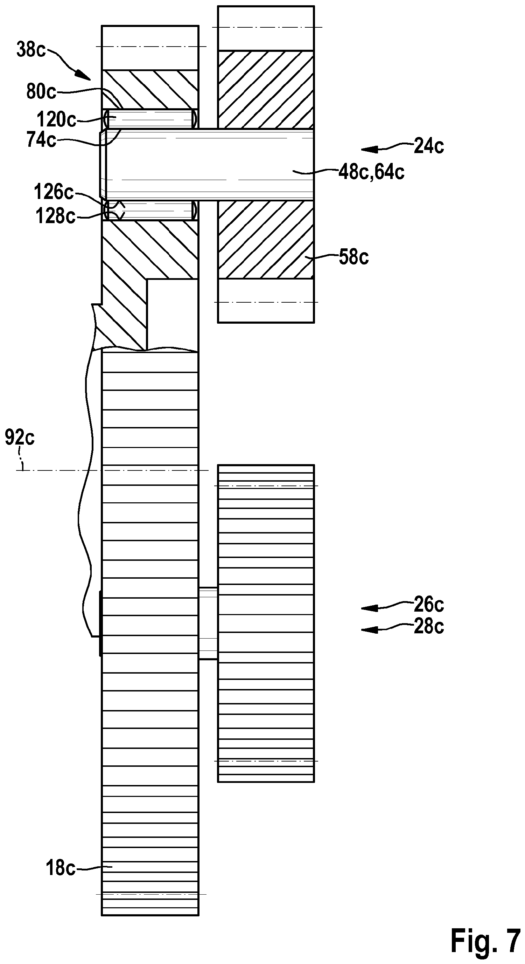

Die Figur 7 zeigt in einem weiteren Ausführungsbeispiel einen Längsschnitt durch einen Planetenträger 18c einer Handwerkzeugmaschinengetriebeeinheit. Die Handwerkzeugmaschinengetriebeeinheit ist analog zu den vorangehenden Ausführungsbeispielen für eine nicht näher dargestellte Handwerkzeugmaschinenvorrichtung vorgesehen. Die Handwerkzeugmaschinenvorrichtung weist eine Werkzeugaufnahme und eine Werkzeugdrehachse 92c auf.

Die Handwerkzeugmaschinengetriebeeinheit ist als ein Mehrstufenplanetengetriebe ausgebildet und weist in dem vorliegenden Ausführungsbeispiel drei Planetengetriebestufen auf. Die Planetengetriebestufen sind entlang der Werkzeugdrehachse 92c nacheinander gestaffelt angeordnet, d.h. eine erste der Planetengetriebestufen ist mit einer weiteren der Planetengetriebestufen und die weitere Planetengetriebestufe ist mit einer dritten der Planetengetriebestufen gekoppelt. Die erste Planetengetriebestufe weist einen Planetenträger 18c, eine Mehrzahl drehbar zu dem Planetenträger 18c gelagerte Planetenräder 24c, 26c, 28c und eine Mehrzahl von Lagereinheiten 38c auf, die dazu vorgesehen sind, jeweils eines der Planetenräder 24c, 26c, 28c drehbar zu dem Planetenträger 18c zu lagern. In dem vorliegenden Ausführungsbeispiel weist die erste Planetengetriebestufe drei Planetenräder 24c, 26c, 28c und drei Lagereinheiten 38c auf. Die erste Planetengetriebestufe umfasst ferner ein zentral angeordnetes, nicht näher dargestelltes Sonnenrad und ein gehäusefest angeordnetes Hohlrad. Das Sonnenrad, der Planetenträger 18c und das Hohlrad weisen eine gemeinsame Drehachse auf, die in einem montierten Zustand mit der Werkzeugdrehachse 92c zusammenfällt. Das Sonnenrad, der Planetenträger 18c und das Hohlrad sind koaxial zueinander angeordnet. Das Hohlrad ist gehäusefest angeordnet.

Die Planetenräder 24c, 26c, 28c umfassen jeweils einen Bolzen 48c, den jeweils eine dem Planetenrad 24c, 26c, 28c zugeordnete Lagereinheit 38c drehbar in dem Planetenträger 18c lagert. Die Bolzen 48c der Planetenräder 24c, 26c, 28c sind dazu vorgesehen, die Planetenräder 24c, 26c, 28c mit dem Planetenträger 18c zu verbinden und ein Drehmoment auf den Planetenträger 18c zu übertragen. Die Lagereinheiten 38c sind jeweils als ein Wälzlager ausgebildet. Die Lagereinheiten 38c sind analog zueinander ausgebildet. Die Lagereinheiten 38c weisen jeweils einen Innenring 74c und jeweils einen Außenring 80c auf, sowie jeweils eine Mehrzahl von Wälzkörpern 120c, die in radialer Richtung zwischen dem Innenring 74c und dem Außenring 80c angeordnet sind. Die Innenringe 74c bilden jeweils eine innere Lauffläche 126c aus und die Außenringe 80c bilden jeweils eine äußere Lauffläche 128c aus. In einem Betriebszustand rollen die Wälzkörper 120c auf den inneren Laufflächen 126c und auf den äußeren Laufflächen 128c ab. Die Innenringe 74c und die Außenringe 80c sind in axialer Richtung innerhalb einer axialen Erstreckung des Planetenträgers 18c angeordnet.

Im Folgenden wird stellvertretend eine erste der Lagereinheiten 38c mit dem zugeordneten Planetenrad 24c beschrieben. Die weiteren Lagereinheiten und Planetenräder 26c, 28c sind analog ausgebildet. Das Planetenrad 24c umfasst einen Grundkörper 58c und ein Bolzenelement 64c, das den Bolzen 48c ausbildet. Das Planetenrad 24c weist jeweils eine Drehachse auf, die parallel zu der Werkzeugdrehachse 92c angeordnet ist. Der Grundkörper 58c des Planetenrads 24c ist scheibenförmig ausgebildet und trägt die Außenverzahnung des Planetenrads 24c. Das Bolzenelement 64c ist zentral in dem Grundkörper 58c angeordnet. Das Bolzenelement 64c und der Grundkörper 58c sind koaxial zu der Drehachse des jeweiligen Planetenrads 24a angeordnet. Das Bolzenelement 64c durchdringt in einem montierten Zustand den Grundkörper 58c des Planetenrads 24c und den Planetenträger 18c. Eine Länge des Bolzenelements 64c entspricht jeweils mindestens einer Summe aus einer axialen Erstreckung des Planetenträgers 18c und einer axialen Erstreckung des Grundkörpers 58c im Bereich der Lagereinheit 38d. Es ist auch denkbar, dass eine Länge des Bolzenelements 64c kleiner ist als die Summe aus der axialen Erstreckung des Planetenträgers 18c und einer axialen Erstreckung des Grundkörpers 58c und dass das Bolzenelement 64c lediglich in den Grundkörper 58c des Planetenrads 24c eingreift. Der Grundkörper 58c und das Bolzenelement 64c sind kraftschlüssig drehfest miteinander verbunden. Der Grundkörper 58c und das Bolzenelement 64c sind schiebefest miteinander verbunden. Das Bolzenelement 64c ist in einem montierten Zustand in den Grundkörper 58c eingepresst. Der Grundkörper 58c weist eine zentrale Bohrung zur Aufnahme des Bolzenelements 64c auf.

Der Innenring 74c der Lagereinheit 38c ist einstückig mit dem Bolzen 48c ausgebildet, d.h. der Bolzen 48c bildet die innere Lauffläche 128c der Lagereinheit 38c aus, die in einem Betriebszustand mit den Wälzkörpern 120c in Kontakt ist und die Wälzkörper 120c führt. Der Außenring 80c der Lagereinheit 38c ist einstückig mit dem Planetenträger 18c ausgebildet, d.h. der Planetenträger 18c bildet die äußere Lauffläche 128c der Lagereinheit 38c aus, die in einem Betriebszustand mit den Wälzkörpern 120c in Kontakt ist und die Wälzkörper 120c führt.

Die Lagereinheit 38c weist eine Laufbahn für die Wälzkörper 120c auf, entlang deren sich die Wälzkörper 120c in einem Betriebszustand bewegen. Die Laufbahn ist kreisförmig ausgebildet und konzentrisch zu dem Bolzen 48c und der Drehachse des Planetenrads 24c angeordnet, das der Lagereinheit 38c zugeordnet ist. Die Laufbahn weist einen Durchmesser auf, der etwa 60 Prozent des Fußkreisdurchmessers des Planetenrads 24c beträgt.

Die Lagereinheit 38c ist in dem vorliegenden Ausführungsbeispiel als ein Nadellager ausgebildet. Die Wälzkörper 120c sind analog zueinander ausgebildet. Die Wälzkörper 120c sind in Form von zylindrischen Rollen ausgebildet und weisen jeweils einen Durchmesser und eine Drehachse auf. Die Wälzkörper 120c sind länglich ausgebildet und weisen eine Axialerstreckung auf, die etwa das Vierfache des Durchmessers beträgt. Die Lagereinheit 38c weist eine Wälzkörperbaugruppe auf, welche die Wälzkörper 120c und einen nicht näher dargestellten Wälzkörperkäfig umfasst. Der Wälzkörperkäfig ist dazu vorgesehen, einen Abstand der Wälzkörper 120c in Umfangsrichtung konstant zu halten. In einem montierten Zustand sind die Drehachsen der Wälzkörper 120c parallel zueinander und zu der Drehachse des Planetenträgers 18c angeordnet. Es ist denkbar, dass das Nadellager ohne einen Wälzkörperkäfig ausgebildet ist, analog zu dem vorangehenden Ausführungsbeispiel. Ferner ist es denkbar, dass der Innenring 74c getrennt von dem Bolzenelement 64c ausgebildet ist und der Außenring 80c getrennt von dem Planetenträger 18c ausgebildet ist.

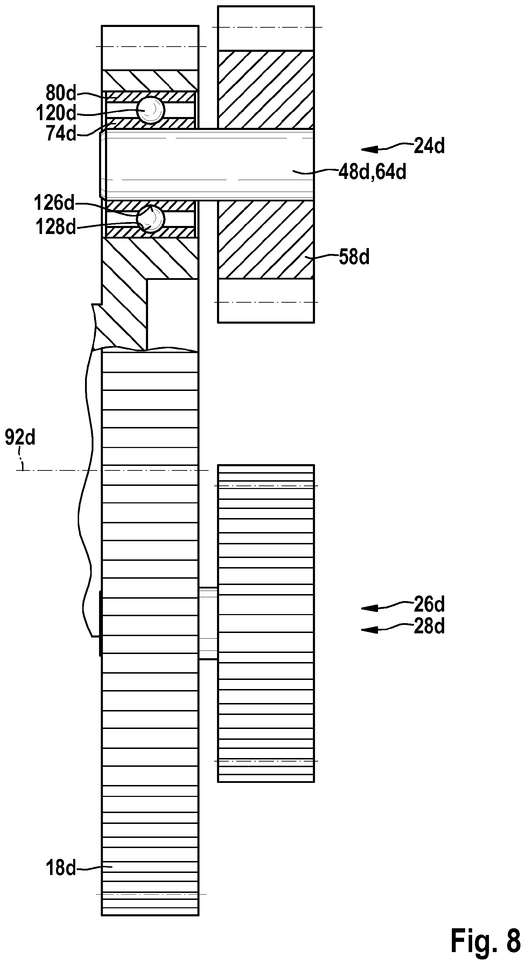

Die Figur 8 zeigt in einem weiteren Ausführungsbeispiel einen Längsschnitt durch einen Planetenträger 18d einer Handwerkzeugmaschinengetriebeeinheit. Die Handwerkzeugmaschinengetriebeeinheit ist analog zu den vorangehenden Ausführungsbeispielen für eine nicht näher dargestellte Handwerkzeugmaschinenvorrichtung vorgesehen. Die Handwerkzeugmaschinenvorrichtung weist eine Werkzeugaufnahme und eine Werkzeugdrehachse 92d auf.

Die Handwerkzeugmaschinengetriebeeinheit ist als ein Mehrstufenplanetengetriebe ausgebildet und weist in dem vorliegenden Ausführungsbeispiel drei Planetengetriebestufen auf. Die Planetengetriebestufen sind entlang der Werkzeugdrehachse 92d nacheinander gestaffelt angeordnet, d.h. eine erste der Planetengetriebestufen ist mit einer weiteren der Planetengetriebestufen und die weitere Planetengetriebestufe ist mit einer dritten der Planetengetriebestufen gekoppelt. Die erste Planetengetriebestufe weist einen Planetenträger 18d, eine Mehrzahl drehbar zu dem Planetenträger 18d gelagerte Planetenräder 24d, 26d, 28d und eine Mehrzahl von Lagereinheiten 38d auf, die dazu vorgesehen sind, jeweils eines der Planetenräder 24d, 26d, 28d drehbar zu dem Planetenträger 18d zu lagern. In dem vorliegenden Ausführungsbeispiel weist die erste Planetengetriebestufe drei Planetenräder 24d, 26d, 28d und drei Lagereinheiten 38d auf. Die erste Planetengetriebestufe umfasst ferner ein zentral angeordnetes, nicht näher dargestelltes Sonnenrad und ein gehäusefest angeordnetes Hohlrad. Das Sonnenrad, der Planetenträger 18d und das Hohlrad weisen eine gemeinsame Drehachse auf, die in einem montierten Zustand mit der Werkzeugdrehachse 92d zusammenfällt. Das Sonnenrad, der Planetenträger 18d und das Hohlrad sind koaxial zueinander angeordnet. Das Hohlrad ist gehäusefest angeordnet.

Die Planetenräder 24d, 26d, 28d umfassen jeweils einen Bolzen 48d, den jeweils eine dem Planetenrad 24d, 26d, 28d zugeordnete Lagereinheit 38d drehbar in dem Planetenträger 18d lagert. Die Bolzen 48d der Planetenräder 24d, 26d, 28d sind dazu vorgesehen, die Planetenräder 24d, 26d, 28d mit dem Planetenträger 18d zu verbinden und ein Drehmoment auf den Planetenträger 18d zu übertragen.

Im Folgenden wird stellvertretend eine erste der Lagereinheiten 38d mit dem zugeordneten Planetenrad 24d beschrieben. Die weiteren Lagereinheiten und Planetenräder 26d, 28d sind analog ausgebildet. Das Planetenrad 24d umfasst einen Grundkörper 58d und ein Bolzenelement 64d, das den Bolzen 48d ausbildet. Das Planetenrad 24d weist eine Drehachse auf, die parallel zu der Werkzeugdrehachse 92d angeordnet ist. Der Grundkörper 58d des Planetenrads 24d ist scheibenförmig ausgebildet und trägt die Außenverzahnung des Planetenrads 24d. Das Bolzenelement 64d ist zentral in dem Grundkörper 58d angeordnet. Das Bolzenelement 64d und der Grundkörper 58d sind koaxial zu der Drehachse des jeweiligen Planetenrads 24a angeordnet. Das Bolzenelement 64d durchdringt in einem montierten Zustand den Grundkörper 58d des Planetenrads 24d und den Planetenträger 18d. Eine Länge des Bolzenelements 64d entspricht jeweils mindestens einer Summe aus einer axialen Erstreckung des Planetenträgers 18d und einer axialen Erstreckung des Grundkörpers 58d im Bereich der Lagereinheit 38d. Es ist auch denkbar, dass eine Länge des Bolzenelements 64d kleiner ist als die Summe aus der axialen Erstreckung des Planetenträgers 18d und einer axialen Erstreckung des Grundkörpers 58d und dass das Bolzenelement 64d lediglich in den Grundkörper 58d des Planetenrads 24d eingreift. Der Grundkörper 58d und das Bolzenelement 64d sind kraftschlüssig drehfest miteinander verbunden. Der Grundkörper 58d und das Bolzenelement 64d sind schiebefest miteinander verbunden. Das Bolzenelement 64d ist in einem montierten Zustand in den Grundkörper 58d eingepresst. Der Grundkörper 58d weist eine zentrale Bohrung zur Aufnahme des Bolzenelements 64d auf.

Die Lagereinheit 38d weist einen Innenring 74d und einen Außenring 80d sowie eine Mehrzahl von Wälzkörpern 120d auf, die in radialer Richtung zwischen dem Innenring 74d und dem Außenring 80d angeordnet sind. Der Innenring 74d bildet eine innere Lauffläche 126d aus und der Außenring 80d bildet eine äußere Lauffläche 128d aus. In einem Betriebszustand rollen die Wälzkörper 120d auf der inneren Lauffläche 126d und auf der äußeren Lauffläche 128d ab. Der Innenring 74d und der Außenring 80d sind in axialer Richtung innerhalb einer axialen Erstreckung des Planetenträgers 18d angeordnet. Im Unterschied zu dem vorangehenden Ausführungsbeispiel ist der Innenring 74d getrennt von dem Bolzen 48d ausgebildet. Der Bolzen 48d ist fest mit dem Innenring 74d verbunden. Der Außenring 80d ist getrennt von dem Planetenträger 18d ausgebildet. Der Außenring 80d der Lagereinheiten 38d ist jeweils fest mit dem Planetenträger 18d verbunden. Der Planetenträger 18d weist eine kreisförmige Ausnehmung zur Aufnahme des Außenrings auf.

Im Unterschied zu dem vorangehenden Ausführungsbeispiel ist die Lagereinheit 38d als ein Kugellager ausgebildet. Die Wälzkörper 120d der Lagereinheit 38d sind in Form von Kugeln ausgebildet. Der Innenring 74d und der Außenring 80d weisen jeweils eine in einer Umfangsrichtung verlaufende Nut auf, die dazu vorgesehen ist, die Wälzkörper 120d in einem Betriebszustand zu führen. Die Nut ist in einer axialen Richtung jeweils mittig in dem Innenring 74d und dem Außenring 80d angeordnet.

Die Lagereinheit 38d weist eine Laufbahn für die Wälzkörper 120d auf, entlang deren sich die Wälzkörper 120d in einem Betriebszustand bewegen. Die Laufbahn ist kreisförmig ausgebildet und konzentrisch zu dem Bolzen 48d und der Drehachse des Planetenrads 24d angeordnet, das der Lagereinheit 38d zugeordnet ist. Die Laufbahn weist einen Durchmesser auf, der etwa 60 Prozent des Fußkreisdurchmessers des Planetenrads 24d beträgt.

## Patentansprüche

1. Handwerkzeugmaschinengetriebeeinheit, mit zumindest einer Planetengetriebestufe (12a, 14a, 16a), die zumindest einen Planetenträger (18a, 20a, 22a; 18b; 18c; 18d), zumindest ein drehbar zu dem Planetenträger (18a, 20a, 22a; 18b; 18c; 18d) gelagertes Planetenrad (24a-36a; 24b, 26b, 28b; 24c, 26c, 28c; 24d, 26d, 28d) und zumindest eine Lagereinheit (38a-46a; 38b, 40b, 42b; 38c; 38d) aufweist, die dazu vorgesehen ist, das Planetenrad (24a-36a; 24b, 26b, 28b; 24c, 26c, 28c; 24d, 26d, 28d) drehbar zu dem Planetenträger (18a, 20a, 22a; 18b; 18c; 18d) zu lagern, wobei das Planetenrad (24a-36a; 24b, 26b, 28b; 24c, 26c, 28c; 24d, 26d, 28d) einen Bolzen (48a-56a; 48b, 50b, 52b; 48c, 48d) umfasst, **dadurch gekennzeichnet, dass** den einen Bolzen (48a-56a;48b,50b,52b;48c,48d) die jeweils eine dem Planetenrad (24a-36a; 24b, 26b, 28b; 24c, 26c, 28c; 24d, 26d, 28d) zugeordnete Lagereinheit (38a-46a; 38b, 40b, 42b; 38c; 38d) drehbar in dem Planetenträger (18a, 20a, 22a; 18b; 18c; 18d) lagert, und die zumindest eine Lagereinheit (38a-46a; 38b, 40b, 42b; 38c) einen Außenring (80a, 82a, 84a; 80b, 82b, 84b; 80c) aufweist, der einstückig mit dem Planetenträger (18a, 20a, 22a; 18b; 18c) ausgebildet ist.

2. Handwerkzeugmaschinengetriebeeinheit nach Anspruch 1,
**dadurch gekennzeichnet, dass**
die zumindest eine Lagereinheit (38a-46a; 38b, 40b, 42b; 38c; 38d) als ein Wälzlager ausgebildet ist.

3. Handwerkzeugmaschinengetriebeeinheit nach Anspruch 1 oder 2,
**dadurch gekennzeichnet, dass**
das Planetenrad (24a-36a; 24b, 26b, 28b; 24c, 26c, 28c; 24d, 26d, 28d) einen Grundkörper (58a, 60a, 62a; 58c, 58d) und ein Bolzenelement (64a-72a; 64b, 66b, 68b; 64c; 64d) umfasst, das den Bolzen (48a-56a; 48b, 50b, 52b; 48c, 48d) ausbildet.

4. Handwerkzeugmaschinengetriebeeinheit nach Anspruch 3,
**dadurch gekennzeichnet, dass**
der Grundkörper (58a, 60a, 62a; 58c, 58d) und das Bolzenelement (64a-72a; 64b, 66b, 68b; 64c; 64d) kraft- und/oder formschlüssig zumindest drehfest miteinander verbunden sind.

5. Handwerkzeugmaschinengetriebeeinheit nach Anspruch 3 oder 4,
**dadurch gekennzeichnet, dass**
das Bolzenelement (64a-72a; 64c; 64d) in einem montierten Zustand den Grundkörper (58a, 60a, 62a; 58c, 58d) des Planetenrads (24a-36a; 24c, 26c, 28c; 24d, 26d, 28d) und den Planetenträger (18a, 20a, 22a; 18c; 18d) durchdringt.

6. Handwerkzeugmaschinengetriebeeinheit nach einem der Ansprüche 3 bis 5,
**dadurch gekennzeichnet, dass**
eine Länge des Bolzenelements (64a-72a; 64c; 64d) jeweils mindestens einer Summe aus einer axialen Erstreckung des Planetenträgers (18a, 20a, 22a; 18c; 18d) und einer axialen Erstreckung des Grundkörpers (58a, 60a, 62a; 58c, 58d) im Bereich der Lagereinheit (38a-46a; 38c; 38d) entspricht.

7. Handwerkzeugmaschinengetriebeeinheit nach einem der Ansprüche 3 bis 5,
**dadurch gekennzeichnet, dass**
eine Länge des Bolzenelements (64a-72a; 64c; 64d) kleiner als eine Summe aus einer axialen Erstreckung des Planetenträgers (18a, 20a, 22a; 18c; 18d) und einer axialen Erstreckung des Grundkörpers (58a, 60a, 62a; 58c, 58d) ist.

8. Handwerkzeugmaschinengetriebeeinheit nach Anspruch 7,
**dadurch gekennzeichnet, dass**
das Bolzenelement (64a-72a; 64c; 64d) lediglich in den Grundkörper (58a, 60a, 62a; 58c, 58d) des Planetenrads (24a-36a; 24c, 26c, 28c; 24d, 26d, 28d) eingreift.

9. Handwerkzeugmaschinengetriebeeinheit nach einem der vorhergehenden Ansprüche,
**dadurch gekennzeichnet, dass**
die zumindest eine Lagereinheit (38a-46a; 38b, 40b, 42b; 38c) einen Innenring (74a, 76a, 78a; 74b, 76b, 78b; 74c) aufweist, der einstückig mit dem Bolzen (48a-56a; 48b, 50b, 52b; 48c) ausgebildet ist.

10. Handwerkzeugmaschinengetriebeeinheit nach einem der vorhergehenden Ansprüche,
**dadurch gekennzeichnet, dass**
die zumindest eine Lagereinheit (38a-46a; 38b, 40b, 42b; 38c) als ein Nadellager ausgebildet ist.

11. Handwerkzeugmaschinengetriebeeinheit nach einem der vorhergehenden Ansprüche,
**dadurch gekennzeichnet, dass**
die zumindest eine Lagereinheit (38a-46a; 38b, 40b, 42b; 38d) als ein Kugellager ausgebildet ist.

12. Handwerkzeugmaschinengetriebeeinheit nach einem der vorhergehenden Ansprüche,
**dadurch gekennzeichnet, dass**
das Planetenrad (24a-36a; 24b, 26b, 28b; 24c, 26c, 28c; 24d, 26d, 28d) als ein Zahnrad ausgebildet ist und einen Fußkreisdurchmesser aufweist und die Lagereinheit (38a-46a; 38b, 40b, 42b; 38c; 38d) eine kreisförmige Lauf- und/oder Gleitbahn aufweist, deren Durchmesser mindestens 50 Prozent des Fußkreisdurchmessers des Planetenrads (24a-36a; 24b, 26b, 28b; 24c, 26c, 28c; 24d, 26d, 28d) beträgt.

13. Handwerkzeugmaschinengetriebeeinheit nach einem der vorhergehenden Ansprüche,
**dadurch gekennzeichnet, dass**
für jedes Planetenrad (24a-36a; 24b, 26b, 28b; 24c, 26c, 28c; 24d, 26d, 28d) jeweils eines der zumindest einen Lagereinheit (38a-46a; 38b, 40b, 42b; 38c; 38d) vorgesehen ist.

14. Handwerkzeugmaschinengetriebeeinheit nach einem der vorgehenden Ansprüche,
**dadurch gekennzeichnet, dass**
das Planetenrad mittels des Bolzens (48a-56a; 48b, 50b, 52b; 48c, 48d) und der zumindest einen Lagereinheit (38a-46a; 38b, 40b, 42b; 38c; 38d) einseitig drehbar zu dem Planetenträger (18a, 20a, 22a; 18b; 18c; 18d) gelagert ist.

15. Handwerkzeugmaschinenvorrichtung, insbesondere Elektrohandwerkzeugmaschinenvorrichtung, mit zumindest einer Handwerkzeugmaschinengetriebeeinheit nach einem der vorhergehenden Ansprüche, die zumindest zwei analog zueinander ausgebildete Planetengetriebestufen (12a, 14a, 16a) aufweist.

## Claims

1. Hand-held power tool gear unit, with at least one planetary gear stage (12a, 14a, 16a) which has at least one planetary carrier (18a, 20a, 22a; 18b; 18c; 18d), at least one planetary gear (24a-36a; 24b, 26b, 28b; 24c, 26c, 28c; 24d, 26d, 28d) which is mounted rotatably with respect to the planetary carrier (18a, 20a, 22a; 18b, 18c, 18d), and at least one bearing unit (38a-46a; 38b, 40b, 42b; 38c; 38d) which is provided to mount the planetary gear (24a-36a; 24b, 26b, 28b; 24c, 26c, 28c; 24d, 26d, 28d) rotatably with respect to the planetary carrier (18a, 20a, 22a; 18b; 18c; 18d), the planetary gear (24a-36a; 24b, 26b, 28b; 24c, 26c, 28c; 24d, 26d, 28d) comprising a pin (48a-56a; 48b, 50b, 52b; 48c, 48d), **characterized in that** the in each case one bearing unit (38a-46a; 38b, 40b, 42b; 38c; 38d) which is assigned to the planetary gear (24a-36a; 24b, 26b, 28b; 24c, 26c, 28c; 24d, 26d, 28d) mounts the one pin (48a-56a; 48b, 50b, 52b; 48c, 48d) rotatably in the planetary carrier (18a, 20a, 22a; 18b; 18c; 18d), and the at least one bearing unit (38a-46a; 38b, 40b, 42b; 38c) has an outer ring (80a, 82a, 84a; 80b, 82b, 84b; 80c) which is configured in one piece with the planetary carrier (18a, 20a, 22a; 18b; 18c).

2. Hand-held power tool gear unit according to Claim 1, **characterized in that** the at least one bearing unit (38a-46a; 38b, 40b, 42b; 38c; 38d) is configured as an anti-friction bearing.

3. Hand-held power tool gear unit according to Claim 1 or 2, **characterized in that** the planetary gear (24a-36a; 24b, 26b, 28b; 24c, 26c, 28c; 24d, 26d, 28d) comprises a main body (58a, 60a, 62a; 58c, 58d) and a pin element (64a-72a; 64b, 66b, 68b; 64c; 64d) which configures the pin (48a-56a; 48b, 50b, 52b; 48c, 48d).

4. Hand-held power tool gear unit according to Claim 3, **characterized in that** the main body (58a, 60a, 62a; 58c, 58d) and the pin element (64a-72a; 64b, 66b, 68b; 64c; 64d) are connected in a non-positive and/or positively locking manner to one another at least fixedly for conjoint rotation.

5. Hand-held power tool gear unit according to Claim 3 or 4, **characterized in that**, in a mounted state, the pin element (64a-72a; 64c; 64d) penetrates the main body (58a, 60a, 62a; 58c, 58d) of the planetary gear (24a-36a; 24c, 26c, 28c; 24d, 26d, 28d) and the planetary carrier (18a, 20a, 22a; 18c; 18d).

6. Hand-held power tool gear unit according to one of Claims 3 to 5, **characterized in that** a length of the pin element (64a-72a; 64c; 64d) corresponds in each case to at least some of an axial extent of the planetary carrier (18a, 20a, 22a; 18c; 18d) and an axial extent of the main body (58a, 60a, 62a; 58c, 58d) in the region of the bearing unit (38a-46a; 38c; 38d).

7. Hand-held power tool gear unit according to one of Claims 3 to 5, **characterized in that** the length of the pin element (64a-72a; 64c; 64d) is smaller than a sum of an axial extent of the planetary carrier (18a, 20a, 28a; 18c; 18d) and an axial extent of the main body (58a, 60a, 62a; 58c, 58d).

8. Hand-held power tool gear unit according to Claim 7, **characterized in that** the pin element (64a-72a; 64c; 64d) engages merely into the main body (58a, 60a, 62a; 58c, 58d) of the planetary gear (24a-36a; 24c, 26c, 28c; 24d, 26d, 28d) .

9. Hand-held power tool gear unit according to one of the preceding claims, **characterized in that** the at least one bearing unit (38a-46a; 38b, 40b, 42b; 38c) has an inner ring (74a, 76a, 78a; 74b, 76b, 78b; 74c) which is configured in one piece with the pin (48a-56a; 48b, 50b, 52b; 48c).

10. Hand-held power tool gear unit according to one of the preceding claims, **characterized in that** the at least one bearing unit (38a-46a; 38b, 40b, 42b; 38c) is configured as a needle bearing.

11. Hand-held power tool gear unit according to one of the preceding claims, **characterized in that** the at least one bearing unit (38a-46a; 38b, 40b, 42b; 38d) is configured as a ball bearing.

12. Hand-held power tool gear unit according to one of the preceding claims, **characterized in that** the planetary gear (24a-36a; 24b, 26b, 28b; 24c, 26c, 28c; 24d, 26d, 28d) is configured as a gearwheel and has a root circle diameter, and the bearing unit (38a-46a; 38b, 40b, 42b; 38c; 38d) has a circular raceway and/or sliding track, the diameter of which is at least 50% of the root circle diameter of the planetary gear (24a-36a; 24b, 26b, 28b; 24c, 26c, 28c; 24d, 26d, 28d).

13. Hand-held power tool gear unit according to one of the preceding claims, **characterized in that** in each case one of the at least one bearing unit (38a-46a; 38b, 40b, 42b; 38c; 38d) is provided for each planetary gear (24a-36a; 24b, 26b, 28b; 24c, 26c, 28c, 24d, 26d, 28d).

14. Hand-held power tool gear unit according to one of the preceding claims, **characterized in that** the planetary gear is mounted on one side such that it can be rotated with respect to the planetary carrier (18a, 20a, 22a; 18b; 18c; 18d) by means of the pin (48a-56a; 48b, 50b, 52b; 48c, 48d) and the at least one bearing unit (38a-46a; 38b, 40b, 42b; 38c; 38d).

15. Hand-held power tool apparatus, in particular electric hand-held power tool apparatus, with at least one hand-held power tool gear unit according to one of the preceding claims which has at least two planetary gear stages (12a, 14a, 16a) which are configured analogously with respect to one another.

## Revendications

1. Unité de transmission de machine-outil portative, comportant au moins un étage de transmission planétaire (12a, 14a, 16a) qui comprend au moins un porte-satellites (18a, 20a, 22a ; 18b ; 18c ; 18d), au moins un satellite (24a-36a ; 24b, 26b, 28b ; 24c, 26c, 28c ; 24d, 26d, 28d) monté rotatif par rapport au porte-satellites (18a, 20a, 22a ; 18b ; 18c ; 18d) et au moins une unité palier (38a-46a ; 38b, 40b, 42b ; 38c ; 38d) qui est destinée à supporter le satellite (24a-36a ; 24b, 26b, 28b ; 24c, 26c, 28c ; 24d, 26d, 28d) de manière rotative par rapport au porte-satellites (18a, 20a, 22a ; 18b ; 18c ; 18d), le satellite (24a-36a ; 24b, 26b, 28b ; 24c, 26c, 28c ; 24d, 26d, 28d) comportant un axe (48a-56a ; 48b, 50b, 52b ; 48c, 48d), **caractérisée en ce que** l'axe (48a-56a ; 48b , 50b , 52b ; 48c, 48d) supporte respectivement une unité palier (38a-46a ; 38b, 40b, 42b ; 38c ; 38d) associée au satellite (24a-36a ; 24b, 26b, 28b ; 24c, 26c, 28c ; 24d, 26d, 28d) de manière rotative dans le porte-satellites (18a, 20a, 22a ; 18b ; 18c ; 18d), et l'au moins une unité palier (38a-46a ; 38b, 40b, 42b ; 38c) comprend une bague extérieure (80a, 82a, 84a ; 80b, 82b, 84b ; 80c) qui est réalisée d'une seule pièce avec le porte-satellites (18a, 20a, 22a ; 18b ; 18c).

2. Unité de transmission de machine-outil portative selon la revendication 1,
**caractérisée en ce que**
l'au moins une unité palier (38a-46a ; 38b, 40b, 42b ; 38c ; 38d) est réalisée sous la forme d'un palier à roulement.

3. Unité de transmission de machine-outil portative selon la revendication 1 ou 2,
**caractérisée en ce que**
le satellite (24a-36a ; 24b, 26b, 28b ; 24c, 26c, 28c ; 24d, 26d, 28d) comporte un corps de base (58a, 60a, 62a ; 58c, 58d) et un élément d'axe (64a-72a ; 64b, 66b, 68b ; 64c ; 64d) qui forme l'axe (48a-56a ; 48b, 50b, 52b ; 48c, 48d).

4. Unité de transmission de machine-outil portative selon la revendication 3,
**caractérisée en ce que**
le corps de base (58a, 60a, 62a ; 58c, 58d) et l'élément d'axe (64a-72a ; 64b, 66b, 68b ; 64c ; 64d) sont reliés l'un à l'autre à force et/ou par complémentarité de forme au moins de manière solidaire en rotation.

5. Unité de transmission de machine-outil portative selon la revendication 3 ou 4,
**caractérisée en ce que**
l'élément d'axe (64a-72a ; 64c ; 64d) traverse le corps de base (58a, 60a, 62a ; 58c, 58d) du satellite (24a-36a ; 24c, 26c, 28c ; 24d, 26d, 28d) et le porte-satellites (18a, 20a, 22a ; 18c ; 18d) dans un état monté.

6. Unité de transmission de machine-outil portative selon l'une des revendications 3 à 5,
**caractérisée en ce**
**qu'**une longueur de l'élément d'axe (64a-72a ; 64c ; 64d) correspond respectivement au moins à une somme d'une étendue axiale du porte-satellites (18a, 20a, 22a ; 18c ; 18d) et d'une étendue axiale du corps de base (58a, 60a, 62a ; 58c, 58d) dans la région de l'unité palier (38a-46a ; 38c ; 38d).

7. Unité de transmission de machine-outil portative selon l'une des revendications 3 à 5,
**caractérisée en ce**
**qu'**une longueur de l'élément d'axe (64a-72a ; 64c ; 64d) est inférieure à une somme d'une étendue axiale du porte-satellites (18a, 20a, 22a ; 18c ; 18d) et d'une étendue axiale du corps de base (58a, 60a, 62a ; 58c, 58d).

8. Unité de transmission de machine-outil portative selon la revendication 7,
**caractérisée en ce que**
l'élément d'axe (64a-72a ; 64c ; 64d) vient en prise seulement dans le corps de base (58a, 60a, 62a ; 58c, 58d) du satellite (24a-36a ; 24c, 26c, 28c ; 24d, 26d, 28d) .

9. Unité de transmission de machine-outil portative selon l'une des revendications précédentes,
**caractérisée en ce que**
l'au moins une unité palier (38a-46a ; 38b, 40b, 42b ; 38c) comprend une bague intérieure (74a, 76a, 78a ; 74b, 76b, 78b ; 74c) qui est réalisée d'une seule pièce avec l'axe (48a-56a ; 48b, 50b, 52b ; 48c).

10. Unité de transmission de machine-outil portative selon l'une des revendications précédentes,
**caractérisée en ce que**
l'au moins une unité palier (38a-46a ; 38b, 40b, 42b ; 38c) est réalisée sous la forme d'un palier à aiguilles.

11. Unité de transmission de machine-outil portative selon l'une des revendications précédentes,
**caractérisée en ce que**
l'au moins une unité palier (38a-46a ; 38b, 40b, 42b ; 38d) est réalisée sous la forme d'un palier à billes.

12. Unité de transmission de machine-outil portative selon l'une des revendications précédentes,
**caractérisée en ce que**
le satellite (24a-36a ; 24b, 26b, 28b ; 24c, 26c, 28c ; 24d, 26d, 28d) est réalisé sous la forme d'une roue dentée et présente un diamètre de pied de denture et l'unité palier (38a- 46a ; 38b, 40b, 42b ; 38c ; 38d) présente un chemin de roulement et/ou de glissement circulaire dont le diamètre est égal à au moins 50 pour cent du diamètre de pied de denture du satellite (24a-36a ; 24b, 26b, 28b ; 24c, 26c, 28c ; 24d, 26d, 28d).

13. Unité de transmission de machine-outil portative selon l'une des revendications précédentes,
**caractérisée en ce que**,
pour chaque satellite (24a-36a ; 24b, 26b, 28b ; 24c, 26c, 28c ; 24d, 26d, 28d), respectivement l'une des au moins une unité palier (38a-46a ; 38b, 40b, 42b ; 38c ; 38d) est prévue.

14. Unité de transmission de machine-outil portative selon l'une des revendications précédentes,
**caractérisée en ce que**
le satellite est monté au moyen de l'axe (48a-56a ; 48b, 50b, 52b ; 48c, 48d) et de l'au moins une unité palier (38a-46a ; 38b, 40b, 42b ; 38c ; 38d) unilatéralement de manière rotative par rapport au porte-satellites (18a, 20a, 22a ; 18b ; 18c ; 18d).

15. Dispositif de machine-outil portative, en particulier dispositif de machine-outil portative électrique, comportant au moins une unité de transmission de machine-outil portative selon l'une des revendications précédentes, laquelle comprend au moins deux étages de transmission planétaire (12a, 14a, 16a) réalisés de manière similaire à l'autre.
